# EUROPÄISCHE PATENTANMELDUNG

(11) **EP 1 686 279 A2**
(43) Veröffentlichungstag der Anmeldung: **02.08.2006**
(21) Anmeldenummer: 06100554.2
(22) Anmeldetag: 19.01.2006
(51) Int. Cl.: F16D 55/226

(54) **Scheibenbremse mit mehreren Schwimmsätteln**

(30) Priorität: 01.02.2005 DE 102005004776
(71) Anmelder: Continental Teves AG & Co. oHG, 60488 Frankfurt am Main (DE)
(72) Erfinder: Bach, Uwe, 65527, Niedernhausen (DE); Bungert, Hans, 65366, Geisenheim (DE); Weiler, Rolf, 65817, Eppstein (DE); Platzer, Rudolf, 60528, Frankfurt/M (DE); Schmidt, Marcel, 55469, Simmern (DE)

(57) **Zusammenfassung**

Die Erfindung betrifft eine Scheibenbremse für Kraftfahrzeuge mit mehreren Schwimmsätteln (1), die jeweils verschiebbar an einem fahrzeugfesten Bremshalter (10, 20, 30) mit mehreren eine zugehörige Bremsscheibe axial überragenden Halterarmen (11, 21, 31) gelagert sind. Die Scheibenbremse umfasst ferner auf beiden Bremsscheibenseiten angeordnete Bremsbeläge (2), die an den Halterarmen (11, 21, 22, 31) verschiebbar geführt sowie in Umfangsrichtung abgestützt sind. Zur Erhöhung des Bremsenkomforts sowie zur Gewichtsreduzierung der gesamten Scheibenbremse sind die Schwimmsättel (1) durch eine Gelenkvorrichtung (5) miteinander verbunden sind, die eine Relativbewegung der Schwimmsättel (1) in axialer Richtung zulässt.

## Beschreibung

Die Erfindung betrifft eine Scheibenbremse für Kraftfahrzeuge mit mehreren Schwimmsätteln, die jeweils verschiebbar an einem fahrzeugfesten Bremshalter gelagert sind.

Aus der DE 100 06 464 A1 ist eine derartige Scheibenbremse bekannt. Die dort beschriebene Scheibenbremse für einen Personenkraftwagen umfasst einen gemeinsamen Bremshalter, der fahrzeugfest angeordnet ist. Der Bremshalter weist mehrere, die zugehörige Bremsscheibe überragende Halterarme auf, an denen ihrerseits Bremsbeläge verschiebbar geführt bzw. abgestützt sind. Außerdem sind am Bremshalter zwei separate Schwimmsättel verschiebbar gelagert. Diese Bauform der Scheibenbremse ermöglicht zwar die Umsetzung hoher Bremsleistungen, erfordert jedoch gleichzeitig einen relativ großen Bauraum. Außerdem wird das hohe Gewicht der gesamten Scheibenbremse als nachteilig empfunden.

Daneben offenbart die WO 2003/095860 A1 eine Scheibenbremse mit mehreren am Bremshalter verschiebbar aufgenommenen Bremsbelägen. Dazu überragt der Bremshalter ebenfalls mit mehreren Halterarmen die zugehörige Bremsscheibe. Im Unterschied zum obigen Dokument ist hier nur ein einziger Schwimmsattel verschiebbar am Bremshalter gelagert. Der Schwimmsattel überragt die Bremsscheibe sowie alle Bremsbeläge und umschließt rahmenförmig den Bremshalter. Hierdurch entsteht für die Scheibenbremse zunächst eine kompaktere Bauform. Allerdings ist ein relativ großer, rahmenförmiger Schwimmsattel erforderlich, um die hohen Bremsleistungen umzusetzen. Dieser rahmenförmige Schwimmsattel weist ein hohes Gewicht auf und führt unter bestimmten Betriebsbedingungen zu Komfortproblemen, die sich beispielsweise in der Entstehung unerwünschter Bremsgeräusche äußern.

Ausgehend davon ist es die Aufgabe der Erfindung eine gattungsgemäße Kraftfahrzeug-Scheibenbremse, insbesondere für hohe Bremsleistungen, anzugeben, die gewichtsoptimiert ausgeführt ist sowie gegenüber dem Stand der Technik einen höheren Bremsenkomfort bietet.

Gelöst wird diese Aufgabe durch eine Kraftfahrzeug-Scheibenbremse nach Patentanspruch 1. Danach umfasst die Scheibenbremse einen fahrzeugfesten Bremshalter, der mit mehreren Halterarmen eine zugehörige Bremsscheibe axial überragt, auf beiden Bremsscheibenseiten angeordnete Bremsbeläge, die an den Halterarmen verschiebbar geführt sowie in Umfangsrichtung abgestützt sind, und mehrere jeweils die Bremsscheibe und die Bremsbeläge übergreifende Schwimmsättel, die jeweils verschiebbar am Bremshalter gelagert sind. Eine solche Scheibenbremse mit mehreren Schwimmsätteln ist unter anderem zur Umsetzung hoher Bremsleistungen geeignet. Um den Bremsenkomfort zu steigern und gleichzeitig das Gesamtgewicht niedrig zu halten sind die Schwimmsättel durch eine Gelenkvorrichtung miteinander verbunden, die eine Relativbewegung der Schwimmsättel in axialer Richtung zulässt. Dadurch können vor allem Dickenschwankungen der Bremsscheibe ausgeglichen werden, was insbesondere die Entstehung von entsprechenden Bremsgeräuschen ('Rubbeln') unterdrückt. Vorteilhafterweise verbindet die Gelenkvorrichtung die Schwimmsättel in radialer Richtung starr, so dass eine gegenseitige Relativverschiebung der Schwimmsättel unterbunden wird. Alternativ kann die Gelenkvorrichtung derart gestaltet werden, dass sie zwar eine radiale Verschiebung des ersten Schwimmsattels gegenüber dem zweiten verhindert, jedoch eine gegenseitige Verdrehung der Schwimmsättel um eine axial verlaufende Drehachse zulässt. Insgesamt verhindert die Gelenkvorrichtung ein radiales Ausheben eines einzelnen Schwimmsattels.

Eine vorteilhafte Ausführung der Scheibenbremse wird dadurch erreicht, dass die Gelenkvorrichtung auf derjenigen Bremsscheibenseite angeordnet ist, auf der die Schwimmsättel am Bremshalter gelagert sind. Je nach Anwendungsfall und insbesondere auch Gewicht der Schwimmsättel kann es auch sinnvoll sein die Schwimmsättel auf beiden Bremsscheibenseiten mit entsprechenden Gelenkvorrichtungen zu versehen. Im einzelnen wird die Gelenkvorrichtung vorzugsweise durch ein axial nachgiebiges Metall- oder Elastomer-Element gebildet, das an beiden Schwimmsätteln befestigt ist. Alternativ können die Schwimmsättel auch durch eine senkrecht zur Achsrichtung formschlüssige Gelenkvorrichtung miteinander verbunden sein.

Als sinnvolle Maßnahme zur Gewichtsreduzierung der Scheibenbremse ist vorgesehen, dass der Bremshalter genau zwei die Bremsscheibe axial überragende Halterarme aufweist, von denen bezogen auf die Hauptdrehrichtung der Bremsscheibe der erste einlaufseitig und der zweite auslaufseitig angeordnet ist. Die beiden Halterarme umschließen damit in Umfangsrichtung die dazwischen liegenden Schwimmsättel. Ein mittlerer Halterarm entfällt gemäß dieser Ausführungsform.

Eine alternative Gestaltungsform des Bremshalters ergibt sich dadurch, dass der Bremshalter zwei die Bremsscheibe axial überragende Halterarme aufweist, von denen bezogen auf die Hauptdrehrichtung der Bremsscheibe der erste einlaufseitig und der zweite auslaufseitig angeordnet ist, und einen dritten dazwischen liegenden mittleren Halterarm, der sich nur auf einer Bremsscheibenseite erstreckt. Damit ist der mittlere Halterarm gegenüber aus dem Stand der Technik bekannten Ausführungsformen verkürzt ausgebildet, so dass sich beim Bremshalter eine Gewichtsersparnis einstellt. Darüber hinaus eröffnet der mittlere Halterarm die Möglichkeit, zumindest auf einer Bremsscheibenseite die Bremsbeläge in Umfangsrichtung auch an diesem Halterarm abzustützen. Um den Bremsenkomfort zu verbessern, ist zumindest ein am mittleren Halterarm angeordneter Bremsbelag bezogen auf die Hauptdrehrichtung der Bremsscheibe rein gezogen abgestützt. Hierbei unterstützt die in Umfangsrichtung gezogene Bremsbelagabstützung grundsätzlich die Verhinderung von Bremsgeräuschen.

Eine vorteilhafte Variante der Bremsbelagabstützung insbesondere bei wegfallendem mittleren Halterarm wird dadurch erreicht, dass von zwei auf einer Bremsscheibenseite angeordneten Bremsbelägen ein erster einlaufseitiger Bremsbelag rein gezogen am zugehörigen Halterarm abgestützt ist und ein zweiter auslaufseitiger Bremsbelag rein gedrückt am zugehörigen Halterarm abgestützt ist. Für diese Form der Bremsbelagabstützung sind ein einlaufseitiger und eine auslaufseitiger Halterarm ausreichend. Neben einer Gewichtsersparnis wird somit auch eine kompakte Bauweise ermöglicht.

Gemäß einer sinnvoll weiterentwickelten Ausführungsform der Scheibenbremse ist vorgesehen, dass zwei auf einer Bremsscheibenseite angeordnete Bremsbeläge durch eine Gelenkvorrichtung miteinander verbunden sind, die in axialer Richtung eine Relativbewegung der Bremsbeläge zulässt und die die Bremsbeläge in radialer Richtung starr verbindet. Dies erleichtert nicht nur den Wegfall des mittleren Halterarms, sondern verbessert auch die Bremsbelagabstützung. Im einzelnen wird die Gelenkvorrichtung vorzugsweise durch ein axial nachgiebiges Metall- oder Elastomer-Element gebildet, das an den beiden entsprechenden Bremsbelägen befestigt ist. Eine weitere alternative Gestaltungsform der Gelenkvorrichtung sieht vor, die Bremsbeläge senkrecht zur Achsrichtung formschlüssig miteinander zu verbinden. Dies lässt sich beispielsweise durch eine Gelenkvorrichtung realisieren, die lediglich eine gegenseitige Verdrehung der Bremsbeläge um eine axial verlaufende Drehachse zulässt.

Weitere sinnvolle Detailmerkmale der Erfindung sind den Ausführungsbeispielen in den Figuren zu entnehmen, die im folgenden näher erläutert werden.

Es zeigt:
- Fig. 1: Zwei Schwimmsättel mit Gelenkvorrichtung in einer Ansicht von der Fahrzeuginnenseite her;
- Fig. 2: die Gelenkvorrichtung aus Figur 1 in drei Ansichten;
- Fig. 3: einen dem Stand der Technik vergleichbaren Bremshalter mit drei die Bremsscheibe überragenden Halterarmen in räumlicher Ansicht;
- Fig. 4: einen Bremshalter mit zwei die Bremsscheibe überragenden Halterarmen und einem verkürzten mittleren Halterarm in räumlicher Ansicht;
- Fig. 5: einen Bremshalter mit ausschließlich zwei die Bremsscheibe überragenden Halterarmen in räumlicher Ansicht;
- Fig. 6: zwei Bremsbeläge mit einer Gelenkvorrichtung in einer ersten Ausführung;
- Fig. 7: zwei Bremsbeläge mit einer Gelenkvorrichtung in einer zweiten Ausführung;
- Fig. 8: eine Draufsicht auf einen Bremshalter gemäß Figur 4 mit zugehörigen Bremsbelägen;
- Fig. 9: eine Teilansicht auf einen Bremshalter mit Bremsbelägen, die über eine Gelenkvorrichtung in einer dritten Ausführung verbunden sind;
- Fig. 10: eine Teilansicht eines mittleren Halterarms mit Bremsbelägen.

Die in den Figuren gezeigte Kraftfahrzeug-Scheibenbremse umfasst einen gemeinsamen fahrzeugfesten Bremshalter 10, 20, 30, an dem zwei oder ggf. auch mehrere Schwimmsättel 1 verschiebbar gelagert sind. Die verschiebbare Anordnung der Schwimmsättel 1 am Bremshalter 10, 20, 30 erfolgt insbesondere über nicht gezeigte Bolzenführungen oder ähnlich wirkende Elemente. Dabei übergreift jeder Schwimmsattel 1 eine zugehörige Bremsscheibe sowie beiderseits der Bremsscheibe angeordnete, zugehörige Bremsbeläge 2.

Der Bremshalter 10, 20, 30 weist neben einem Basisabschnitt 13, 23, 33 mehrere Halterarme 11, 21, 22, 31 auf, die die Bremsscheibe zum Teil überragen und innerhalb von Führungsabschnitten 4 der Halterarme 11, 21, 22, 31 die Bremsbeläge 2 verschiebbar aufnehmen. Im einzelnen sind die Bremsbeläge 2 jeweils mit seitlichen Ansätzen 3 axial verschiebbar in den Führungsabschnitten 4 geführt sowie radial bzw. tangential abgestützt. Dabei sind die Führungsabschnitte 4 vorzugsweise nutförmig gestaltet, um eine hinsichtlich des Bremsenkomforts günstige gezogene Bremsbelagabstützung in Umfangsrichtung zu ermöglichen. Auf diesem Wege lassen sich auftretende Bremsumfangskräfte vorteilhaft über den Bremshalter 10, 20, 30 abführen.

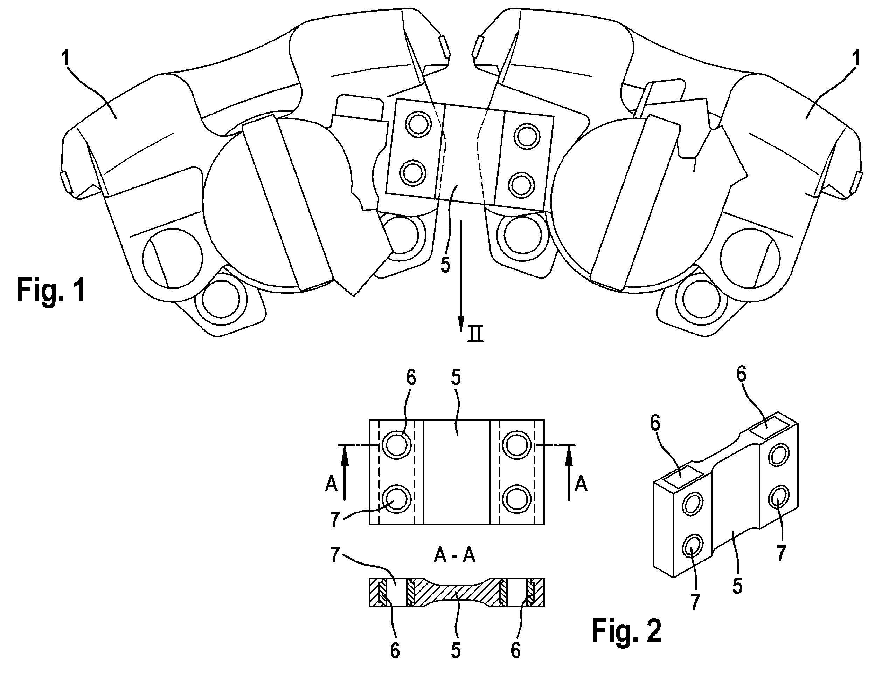

Wie beispielsweise Figur 1 verdeutlicht, sind die Schwimmsättel 1 zur Erhöhung des Bremsenkomforts über eine axial nachgiebige Gelenkvorrichtung 5 miteinander verbunden. Dabei lässt die Gelenkvorrichtung 5 eine axiale Relativbewegung zu, verhindert aber eine radiale Relativbewegung zwischen den Schwimmsätteln 1. Ein radiales Ausheben eines Schwimmsattels 1 kann dadurch verhindert werden. Im einzelnen ist die Gelenkvorrichtung 5 bevorzugt als axial nachgiebiges Metall- bzw. Elastomer-Element 5 ausgebildet, das an beiden Schwimmsätteln 1 insbesondere lösbar befestigt ist. Die Gelenkvorrichtung 5 aus den Figuren 1, 2 ist als kombiniertes Metall-Elastomer-Element 5 gestaltet. Danach besteht die Gelenkvorrichtung im wesentlichen aus einem ElastomerWerkstoff mit gewünschten Werkstoffeigenschaften. In den Randbereichen sind metallische Einsätze 6 vorgesehen, die die Befestigungsabschnitte der Gelenkvorrichtung entsprechend verstärken. Beispielsweise lässt sich die Gelenkvorrichtung über Befestigungslöcher 7 problemlos an den Schwimmsätteln 1 verschrauben. Alternativ kann die Gelenkvorrichtung gemäß einer nicht gezeigten Variante die beiden Schwimmsättel 1 senkrecht zur Achsrichtung formschlüssig verbinden. Grundsätzlich gestattet die Gelenkvorrichtung 5 eine axiale Relativverschiebung der Schwimmsättel 1. Damit können unter anderem Dickenschwankungen der Bremsscheibe ausgeglichen werden sowie daraus resultierende Bremsgeräusche unterbunden werden.

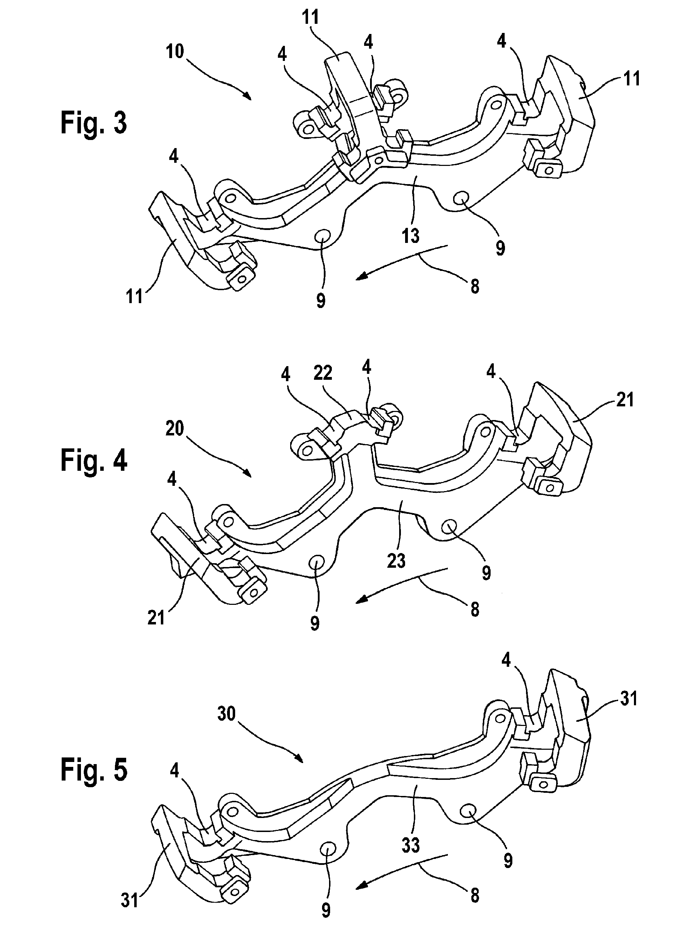

In den Figuren 3-5 sind verschiedene Ausführungen von Bremshaltern 10, 20, 30 gezeigt, die je nach Anwendungsfall eine unterschiedliche Form der Bremsbelagabstützung in Umfangsrichtung ermöglichen. Grundsätzlich sind die Bremshalter 10, 20, 30 jeweils über Befestigungslöcher 9 im Basisabschnitt 13, 23, 33 fahrzeugfest montiert. Dabei ist Figur 3 ein dem Stand der Technik vergleichbarer Bremshalter 10 zu entnehmen, der drei die Bremsscheibe axial überragende Halterarme 11 aufweist. An den Halterarmen 11 sind die Bremsbeläge 2 in nutartigen Führungsabschnitten 4 axial verschiebbar geführt sowie radial bzw. tangential abgestützt. Die beiden außenliegenden Halterarme 11 befinden sich bezogen auf die Hauptdrehrichtung 8 der Bremsscheibe, d. h. bei Vorwärtsfahrt, im ein- bzw. auslaufseitigen Bereich der Scheibenbremse. Der dazwischenliegende mittlere Halterarm 11 besitzt auf beiden Seiten in Umfangsrichtung Führungsabschnitte 4 für die Bremsbeläge 2. Diese Gestaltung des Bremshalters 10 mit drei die Bremsscheibe überragenden Halterarmen 11 bietet den Vorteil, alle Bremsbeläge 2 der jeweiligen Schwimmsättel 1 bezogen auf die Hauptdrehrichtung 8 der Bremsscheibe gezogen abzustützen.

Figur 4 zeigt demgegenüber eine weiterentwickelte Ausführung eines Bremshalters 20. Dieser Bremshalter 20 weist zwei außenliegende Halterarme 21 auf, die jeweils die Bremsscheibe axial überragen, sowie einen mittleren Halterarm 22, der gegenüber den übrigen Halterarmen 21 verkürzt ausgebildet ist und somit die Bremsscheibe nicht überragt. Dadurch ergibt sich für den Bremshalter 20 insgesamt eine Gewichtseinsparung. An den beiden außenliegenden Halterarmen 21, die bezogen auf die Hauptdrehrichtung 8 der Bremsscheibe angeordnet sind, können über die Führungsabschnitte 4 vorteilhaft die Bremsbeläge 2 auf beiden Bremsscheibenseiten abgestützt werden. Der verkürzte mittlere Halterarm 22 gestattet lediglich die Abstützung von Bremsbelägen 2 auf einer Bremsscheibenseite.

Eine weitergehende Optimierung des Bremshalters 30 zeigt Figur 5. Beim dortigen Bremshalter 30 entfällt der mittlere Halterarm vollständig, so dass ausschließlich die beiden außenliegenden Halterarme 31 verbleiben. Die Bremsbeläge 2 und insbesondere die an diesen anliegenden Bremsumfangskräfte sind nur an den außenliegenden Halterarmen 31 abgestützt. Dabei bewirkt der vollständige Entfall des mittleren Halterarms für den Bremshalter 30 eine erhebliche Gewichtseinsparung.

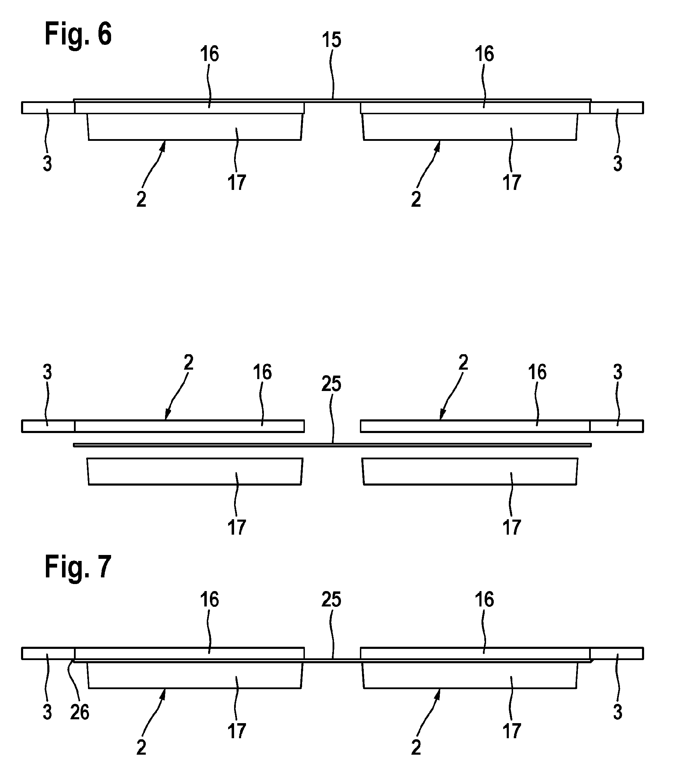

Aus den Figuren 6 und 7 gehen zwei vorteilhafte Ausführungen von aneinander gekoppelten Bremsbelägen 2 hervor, wie sie bei einer gattungsgemäßen Scheibenbremse insbesondere in Verbindung mit Bremshaltern 20, 30 ohne mittleren Halterarm Verwendung finden. Jeder Bremsbelag 2 umfasst im einzelnen eine Trägerplatte 16 und einen Reibbelag 17, der an der Trägerplatte 16 befestigt ist. Ähnlich wie die Schwimmsättel 1 sind auch die Bremsbeläge 2 durch eine Gelenkvorrichtung 15, 25 miteinander verbunden, die eine begrenzte axiale Relativverschiebung der Bremsbeläge 2 zulässt und die Bremsbeläge in radialer Richtung starr verbindet. Innerhalb der gezeigten Ausführungsbeispiele ist die Gelenkvorrichtung 15 als Blechelement 15, 25 ausgebildet, das vorzugsweise aus einem geeigneten Federmaterial mit elastischen Eigenschaften besteht. Gemäß einer ersten Variante nach Figur 6 ist das Blechelement 15 auf der dem Reibbelag 17 gegenüberliegenden Rückseite der Trägerplatte 16 an beiden Bremsbelägen 2 befestigt. Insbesondere ist das Blechelement 15 maßgenau mit den jeweiligen Trägerplatten 16 der Bremsbeläge 2 verschweißt. Auf diese Art und Weise können die beiden Bremsbeläge sehr maßgenau zueinander fixiert werden, wodurch die Außenmaße der beiden Bremsbeläge 2 exakt festgelegt werden können.

Gemäß einer zweiten Alternative nach Figur 7 ist das Blechelement 25 zwischen den Trägerplatten 16 und den zugehörigen Reibbelägen 17 der beiden Bremsbeläge 2 angeordnet. Zur Befestigung ist das Blechelement 25 mittels einer umlaufenden Schweißnaht 26 an beiden Trägerplatten 16 fixiert. Diese Schweißnaht 26 wird vorzugsweise durch Laserschweißen erzeugt, um eine hohe Maßgenauigkeit sicher zu stellen. Zur weiteren Fertigungsvereinfachung weist das Blechelement 25 eine entsprechende Oberflächengestaltung auf, die zur Reibbelagbefestigung gleichzeitig als Sinterrauhgrund dienen kann. Auf diesem Wege lassen sich die Reibbeläge 17 über das Blechelement 25 sicher an den Trägerplatten 16 befestigen. In jedem Falle wird dadurch eine gelenkartige Verbindung der Bremsbeläge 2 mit der Möglichkeit einer begrenzten axialen Relativverschiebung der Bremsbeläge 2 geschaffen. Alternativ zur Befestigung mittels Schweißen lässt sich das Blechelement 15, 25 auch anders an den Trägerplatten 16 befestigen, z. B. durch Kleben, Nieten, Löten , Umformen etc.. Eine weitere nicht gezeigte Möglichkeit der gelenkartigen Verbindung der Bremsbeläge 2 bildet eine senkrecht zur Achsrichtung formschlüssige Verbindung der beiden Bremsbeläge 2. Diese lässt eine axiale Relativverschiebung zwischen den Bremsbelägen 2, während sie senkrecht zur Achsrichtung starr verbunden sind. Darüber hinaus ist auch eine ebenfalls nicht gezeigte Gelenkverbindung denkbar, die neben der axialen Relativverschiebung eine gegenseitige Verdrehung der Bremsbeläge um eine axiale Drehachse erlaubt.

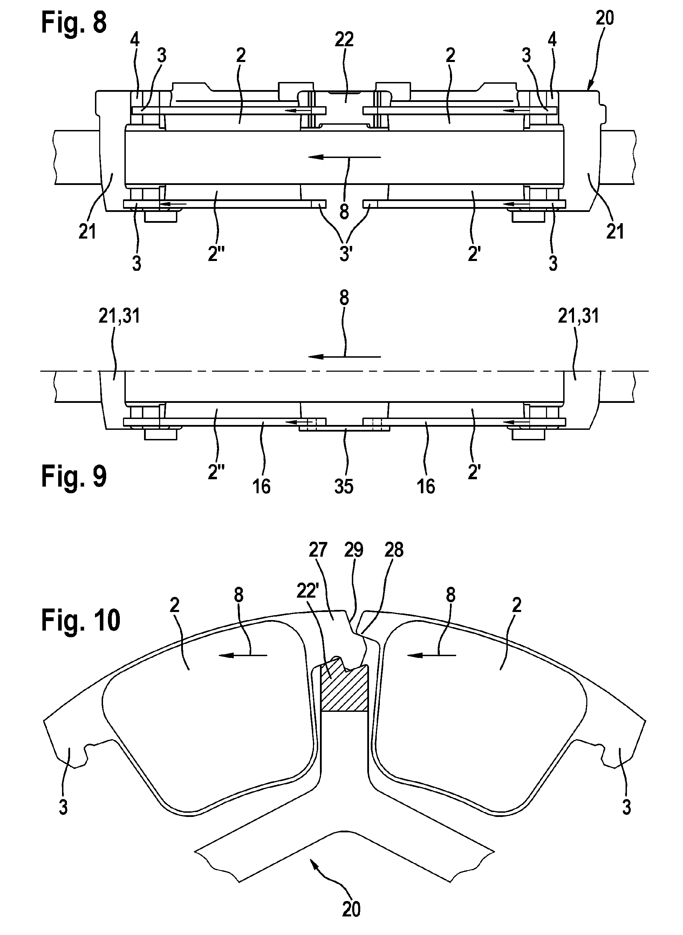

Die Figuren 8-10 zeigen (Teil-)Ansichten eines Bremshalters mit zugehörigen Bremsbelägen 2, aus denen vor allem die jeweilige Art der tangentialen Bremsbelagabstützung am Bremshalter deutlich wird.

Figur 8 verdeutlicht in Draufsicht einen Bremshalter 20 nach Figur 4 mit einem verkürzt ausgeführten mittleren Halterarm 22. Dabei sind die Bremsbeläge 2, 2', 2" mit seitlichen Ansätzen 3 jeweils in Führungsabschnitten 4 der Halterarme 21, 22 axial verschiebbar geführt sowie tangential und radial abgestützt. Die fahrzeugbezogen auf der axial innenliegenden Seite angeordneten Bremsbeläge 2 sind bezogen auf die Hauptdrehrichtung 8 der Bremsscheibe ziehend am einlaufseitigen 21 bzw. mittleren Halterarm 22 abgestützt. Diese Form der Bremsbelagabstützung ist hinsichtlich des Bremskomforts sowie der Vermeidung von Bremsgeräuschen günstig. Auf der axial außenliegenden Seite ist hingegen der einlaufseitige Bremsbelag 2' rein ziehend am einlaufseitigen Halterarm 21 abgestützt, während der auslaufseitige Bremsbelag 2" rein drückend am auslaufseitigen Halterarm abgestützt ist. Diese Ausführung der Abstützung der axial außenliegenden Bremsbeläge 2', 2" ergibt sich daraus, dass die Bremsbeläge 2', 2" nicht mittels einer Gelenkvorrichtung verbunden sind. Für eine solche Bauform bietet es sich an, die tangential innenliegenden seitlichen Ansätze 3' der Bremsbeläge 2', 2" an den zugehörigen Schwimmsätteln zu befestigen.

Figur 9 ist eine alternative Ausführungsform eines Bremshalters 20, 30 nach den Figuren 4 oder 5 zu entnehmen, bei dem beide axial außenliegenden Bremsbeläge 2', 2" gezogen am einlaufseitigen Halterarm 21, 31 abgestützt sind. Dies wird ermöglicht durch eine weitere Ausführung einer Gelenkvorrichtung 35, die die beiden Bremsbeläge 2', 2" wie bereits beschrieben verbindet. Die Gelenkvorrichtung 35 wird im einzelnen durch ein Blechelement 35 gebildet, das jeweils mit der Trägerplatte 16 des Bremsbelags 2', 2" vernietet ist. Dadurch werden die beiden Bremsbeläge 2', 2" wie gewünscht miteinander verbunden, wobei eine begrenzte axiale Relativverschiebung zugelassen wird.

Ferner zeigt Figur 10 eine weitere Variante eines Bremshalters 20 vergleichbar dem in Figur 4 mit axial innenliegenden Bremsbelägen 2. Die beiden Bremsbeläge 2 sind analog zum Ausführungsbeispiel nach Figur 8 bezogen auf die Hauptdrehrichtung 8 der Bremsscheibe rein gezogen abgestützt. Der einlaufseitige Bremsbelag 2 ist mit seinem seitlichen Ansatz 3 am nichtgezeigten einlaufseitigen Halterarm abgestützt während der auslaufseitige Bremsbelag 2 mit einem speziellgestalteten hakenförmigen Ansatz 27 am entsprechend geformten mittleren Halterarm 22' gezogen abgestützt ist. Dabei ist am hakenförmigen Ansatz 27 eine Ausnehmung 29 angeformt, in der der einlaufseitige Bremsbelag mit einem entsprechend gestalteten seitlichen Vorsprung 28 radial aufliegen kann. Dabei stützt sich der seitliche Vorsprung 28 nicht tangential am seitlichen Ansatz 27 ab, sondern liegt lediglich radial auf diesem auf. Dies vereinfacht entscheidend die Gestaltung des verkürzten mittleren Halterarms 22' und reduziert somit den Fertigungsaufwand sowie das Gewicht.

## Patentansprüche

1. Scheibenbremse für ein Kraftfahrzeug mit einem fahrzeugfesten Bremshalter (10, 20, 30), der mit mehreren Halterarmen (11, 21, 31) eine zugehörige Bremsscheibe axial überragt, mit auf beiden Bremsscheibenseiten angeordneten Bremsbelägen (2), die an den Halterarmen (11, 21, 22, 31) verschiebbar geführt sowie in Umfangsrichtung abgestützt sind, und mit mehreren jeweils die Bremsscheibe und die Bremsbeläge (2) übergreifenden Schwimmsätteln (1), die jeweils verschiebbar am Bremshalter (10, 20, 30) gelagert sind, **dadurch gekennzeichnet, dass** die Schwimmsättel (1) durch eine Gelenkvorrichtung (5) miteinander verbunden sind, die eine Relativbewegung der Schwimmsättel (1) in axialer Richtung zulässt.

2. Scheibenbremse nach Anspruch 1, **dadurch gekennzeichnet, dass** die Gelenkvorrichtung (5) die Schwimmsättel (1) in radialer Richtung starr verbindet.

3. Scheibenbremse nach einem der vorhergehenden Ansprüche, **dadurch gekennzeichnet, dass** die Gelenkvorrichtung (5) auf derjenigen Bremsscheibenseite angeordnet ist, auf der die Schwimmsättel (1) am Bremshalter (10, 20, 30) gelagert sind.

4. Scheibenbremse nach einem der vorhergehenden Ansprüche, **dadurch gekennzeichnet, dass** der Bremshalter (20, 30) genau zwei die Bremsscheibe axial überragende Halterarme (21, 31) aufweist, von denen bezogen auf die Hauptdrehrichtung (8) der Bremsscheibe der erste einlaufseitig und der zweite auslaufseitig angeordnet ist.

5. Scheibenbremse nach einem der vorhergehenden Ansprüche, **dadurch gekennzeichnet, dass** der Bremshalter (20) zwei die Bremsscheibe axial überragende Halterarme (21) aufweist, von denen bezogen auf die Hauptdrehrichtung (8) der Bremsscheibe der erste einlaufseitig und der zweite auslaufseitig angeordnet ist, und einen dritten dazwischen liegenden mittleren Halterarm (22, 22'), der sich nur auf einer Bremsscheibenseite erstreckt.

6. Scheibenbremse nach Anspruch 5, **dadurch gekennzeichnet, dass** zumindest ein am mittleren Halterarm (22, 22') angeordneter Bremsbelag (2) bezogen auf die Hauptdrehrichtung (8) der Bremsscheibe rein gezogen abgestützt ist.

7. Scheibenbremse nach einem der vorhergehenden Ansprüche, **dadurch gekennzeichnet, dass** von zwei auf einer Bremsscheibenseite angeordneten Bremsbelägen (2', 2") ein erster einlaufseitiger Bremsbelag (2') rein gezogen am zugehörigen Halterarm (21) abgestützt ist und ein zweiter auslaufseitiger Bremsbelag (2") rein gedrückt am zugehörigen Halterarm (21) abgestützt ist.

8. Scheibenbremse nach einem der vorhergehenden Ansprüche 1-6, **dadurch gekennzeichnet, dass** zwei auf einer Bremsscheibenseite angeordnete Bremsbeläge (2, 2', 2") durch eine Gelenkvorrichtung (15, 25, 35) miteinander verbunden sind, die in axialer Richtung eine Relativbewegung der Bremsbeläge (2, 2', 2") zulässt und die die Bremsbeläge (2, 2', 2") in radialer Richtung starr verbindet.

9. Scheibenbremse nach Anspruch 8, **dadurch gekennzeichnet, dass** die Bremsbeläge (2, 2', 2") mittels eines Metall- oder Elastomer-Elements (15, 25, 35) miteinander verbunden sind.

10. Scheibenbremse nach Anspruch 8, **dadurch gekennzeichnet, dass** die Bremsbeläge (2, 2', 2") senkrecht zur Achsrichtung formschlüssig miteinander verbunden sind.
